# EUROPÄISCHE PATENTANMELDUNG

(11) **EP 2 952 326 A1**
(43) Veröffentlichungstag der Anmeldung: **09.12.2015**
(21) Anmeldenummer: 15170183.6
(22) Anmeldetag: 02.06.2015
(51) Int. Cl.: B29C 45/28

(54) **NADELVERSCHLUSSDÜSENSYSTEM**

(30) Priorität: 02.06.2014 DE 102014210335
(71) Anmelder: awetis engineering+manufacturing GmbH, 69514 Laudenbach (DE)
(72) Erfinder: PÜHRINGER, Michael, 4131 Obermühl (AT)
(74) Vertreter: Herzog, Fiesser & Partner Patentanwälte PartG mbB

(57) **Zusammenfassung**

Es wird ein Nadelverschlussdüsensystem (110) vorgeschlagen. Das Nadelverschlussdüsensystem (110) umfasst eine Einspritzdüse (50) zum Einbringen von Spritzgut in eine Spritzgussform (10), wobei die Einspritzdüse (50) einen Düsenkörper (52) und eine Düsenspitze (54) mit einer Austrittsöffnung (86) für das Spritzgut aufweist. Das Nadelverschlussdüsensystem (110) umfasst weiterhin eine Nadel (112), wobei die Nadel (112) in dem Düsenkörper (52) derart angeordnet ist, dass die Nadel (112) zum wahlweisen Öffnen oder Verschließen der Austrittsöffnung in einer Längserstreckungsrichtung (114) des Düsenkörpers (52) axial verschiebbar ist. Das Nadelverschlussdüsensystem (110) umfasst weiterhin eine Betätigungsvorrichtung (116) zum Verschieben der Nadel (112) und eine Stellvorrichtung (118) zum Einstellen eines Öffnungshubs der Nadel (112), wobei der Öffnungshub der Nadel (112) mittels einer verschiebbaren, konvexen Anschlagfläche (136) der Stellvorrichtung (118) einstellbar ist.

## Beschreibung

### Gebiet der Erfindung

Die Erfindung betrifft ein Nadelverschlussdüsensystem mit einer Einspritzdüse zum Einbringen von Spritzgut, insbesondere von Kunststoffmaterial, beispielsweise Elastomere, in eine Spritzgussform und eine Spritzgussform für Spritzgut. Derartige Nadelverschlussdüsensysteme mit Einspritzdüsen werden beispielsweise bei Spritzgussformen zur Erzeugung eines Formlings, beispielsweise bei der Herstellung von Kunststoffteilen, verwendet, insbesondere unter Verwendung von Elastomerwerkstoffen. Auch andere Einsatzgebiete sind jedoch denkbar.

### Stand der Technik

Aus dem Stand der Technik ist eine Vielzahl von Nadelverschlussdüsensystemen mit Einspritzdüsen zum Einbringen von Spritzgut in eine Spritzgussform bekannt. Derartige Nadelverschlussdüsensysteme werden in der Regel in einer Spritzgussform verwendet. In der Spritzgussform wird das Spritzgut, beispielsweise ein Kunststoffmaterial, über eine Zuführvorrichtung, beispielsweise über einen Extruder, der Einspritzdüse zugeführt. Die Einspritzdüse weist in der Regel einen Fließkanal im Inneren eines Düsenkörpers auf, der mit der Zuführvorrichtung an einem Ende verbunden ist, so dass das Spritzgut von der Zuführvorrichtung durch den Fließkanal und eine Anspritzbohrung der Einspritzdüse fließt. An dem anderen Ende des Fließkanals ist in der Regel eine Düsenspitze angeordnet, durch welche das Spritzgut aus der Einspritzdüse in einen Einspritzkanal einer Formplatte der Spritzgussform eintritt. In dem Düsenkörper ist üblicherweise eine Nadel angeordnet, die zum wahlweisen Öffnen oder Verschließen einer Austrittsöffnung der Einspritzdüse in einer Längserstreckungsrichtung des Düsenkörpers axial verschiebbar ist.

Die AT 005 750 U1 beschreibt eine Einspritzdüse mit einem Nadelverschluss. Die Nadel ist mittels eines Antriebs verstellbar.

Aus verschiedenen Gründen kann es von Interesse sein, einen Öffnungshub der Nadel einzustellen bzw. zu verändern. So lässt sich über eine Einstellung des Öffnungshubs der Nadel die Menge an Spritzgut, die durch die Düsenspitze und durch die Austrittsöffnung gelangt, einstellen. Die EP 0 818 295 A1 und EP 1 477 292 B1 beschreiben beispielsweise Nadelverschlussdüsensysteme, bei denen der Öffnungshub der Nadel einstellbar ist.

Nachteilig bei den zuletzt genannten Nadelverschlussdüsensystemen ist, dass die Stellvorrichtungen zum Einstellen des Öffnungshubs der Nadel vergleichsweise kompliziert im Aufbau sind oder sich der Öffnungshub nicht exakt einstellen lässt.

### Aufgabe der Erfindung

Es ist daher Aufgabe der vorliegenden Erfindung, ein Nadelverschlussdüsensystem bereitzustellen, welches die Nachteile bekannter Nadelverschlussdüsensysteme zumindest weitgehend vermeidet. Insbesondere soll ein Nadelverschlussdüsensystem bereitgestellt werden, bei dem sich der Öffnungshub der Nadel in einfacher Weise exakt einstellen lässt.

### Offenbarung der Erfindung

Diese Aufgabe wird gelöst durch ein Nadelverschlussdüsensystem und eine Spritzgussform mit den Merkmalen der unabhängigen Patentansprüche. Bevorzugte Ausgestaltungen, welche einzeln oder in Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nichtausschließlicher Weise verwendet. Dementsprechend können sich diese Begriffe sowohl auf Situationen beziehen, in welchen, neben dem durch diese Begriffe eingeführten Merkmal, keine weiteren Merkmale vorhanden sind oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d. h. auf eine Situation, in welcher A ausschließlich aus B besteht) als auch auf die Situation, in welcher, zusätzlich zu B, ein oder mehrere weitere Elemente in A vorhanden sind, beispielsweise Element C, Elemente C und D oder sogar weitere Elemente.

Ein erfindungsgemäßes Nadelverschlussdüsensystem umfasst eine Einspritzdüse zum Einbringen von Spritzgut in eine Spritzgussform. Die Einspritzdüse weist einen Düsenkörper und eine Düsenspitze mit einer Austrittsöffnung für das Spritzgut auf. Das Nadelverschlussdüsensystem umfasst weiterhin eine Nadel, wobei die Nadel in dem Düsenkörper derart angeordnet ist, dass die Nadel zum wahlweisen Öffnen oder Verschließen der Austrittsöffnung in einer Längserstreckungsrichtung des Düsenkörpers axial verschiebbar ist. Das Nadelverschlussdüsensystem umfasst weiterhin eine Betätigungsvorrichtung zum Verschieben der Nadel und eine Stellvorrichtung zum Einstellen eines Öffnungshubs der Nadel. Der Öffnungshub der Nadel ist mittels einer verschiebbaren, konvexen Anschlagfläche der Stellvorrichtung einstellbar.

Durch diese Verstellbarkeit des Öffnungshubs ist es möglich, das Nadelverschlussdüsensystem bei unterschiedlich großen Formnestern als auch bei Materialien unterschiedlicher Viskosität einzusetzen.

Ein Spritzgut kann im Rahmen der vorliegenden Erfindung allgemein eine beliebige einspritzbare Masse sein, also eine verformbare Substanz oder ein verformbares Substanzgemisch. Insbesondere kann es sich um eine zähe Masse handeln, mit Viskositäten von etwa 1 bis 100 kPa*s. Insbesondere kann das Spritzgut eine Kunststoffmasse sein oder umfassen und/oder kann eine Masse sein, die eine oder mehrere Substanzen enthält, die sich zu einem oder mehreren Kunststoffen verbinden können und/oder die reagieren können, um einen oder mehrere Kunststoffe zu erzeugen. Insbesondere kann das Spritzgut einen noch nicht vernetzten oder zumindest noch nicht vollständig vernetzten Kunststoff umfassen und/oder eine Kunststoff-Rohmasse. So kann das Spritzgut insbesondere ein noch nicht vulkanisiertes Elastomer oder ein zumindest noch nicht vollständig vulkanisiertes Elastomer umfassen. Bei dem Spritzgut handelt es sich bevorzugt um plastische wärmehärtbare Materialien. Wärmehärtbare Materialien im Sinne der vorliegenden Erfindung sind im wesentlichen Kunststoffe, die sich bei höheren Temperaturen verfestigen, oder vulkanisierende, elastomere Materialien, wie etwa Silikone, Kautschuk oder Gummi. Solche Kunststoffe werden bei der Verarbeitung bei niedriger Temperatur über eine Einspritzdüse in ein Formnest gespritzt, und vulkanisieren dort unter Wärmeeinfluss zum gewünschten Spritzgussteil aus.

Insbesondere kann der Öffnungshub der Nadel mittels der verschiebbaren, konvexen Anschlagfläche der Stellvorrichtung stufenlos einstellbar sein. Dadurch kann die Menge an Spritzgut, das aus der Düsenspitze fließt, exakt eingestellt werden.

Die Stellvorrichtung kann mindestens eine Kugel aufweisen. Bevorzugt weist in diesem Fall die Kugel die verschiebbare, konvexe Anschlagfläche auf. Die verschiebbare, konvexe Anschlagfläche ist in diesem Fall beispielsweise eine Oberfläche der Kugel. Eine Kugel ist einfach und exakt verschiebbar, so dass der Öffnungshub einfach und exakt einstellbar ist.

Die Stellvorrichtung kann eine Kurvenbahn zum Führen der Kugel aufweisen. Ein erster Abschnitt der Kurvenbahn kann sich abschnittsweise in einer Richtung erstrecken, die im Wesentlichen parallel zu der Längserstreckungsrichtung des Düsenkörpers ist. Der erste Abschnitt der Kurvenbahn ist beispielsweise der Betätigungsvorrichtung zugewandt. Ein zweiter Abschnitt der Kurvenbahn kann sich abschnittsweise in einer Richtung erstrecken, die im Wesentlichen senkrecht zu der Längserstreckungsrichtung des Düsenkörpers ist. Der zweite Abschnitt der Kurvenbahn ist beispielsweise der Betätigungsvorrichtung abgewandt. Dadurch wird eine Kurvenbahn realisiert, die gekrümmt ist. Insbesondere geht die Kurvenbahn von einem bezüglich der Längserstreckungsrichtung radialen Abschnitt in einen bezüglich der Längserstreckungsrichtung axialen Abschnitt über. In dem axialen Abschnitt können die Kugeln einfach von außen verschoben werden, wohingegen in dem axialen Abschnitt die Kugeln den Öffnungshub in axialer Richtung verändern bzw. einstellen. Die Stellvorrichtung kann eine Gewindespindel oder eine elektrische Antriebsvorrichtung aufweisen.

Die Betätigungsvorrichtung kann als Pneumatik- oder Hydrauliksystem ausgebildet sein. Die Betätigungsvorrichtung kann insbesondere einen zweiteiligen Kolben mit einem ersten Kolbenteil und einem zweiten Kolbenteil aufweisen. Die Nadel kann einen Nadelschaft und einen in der Betätigungsvorrichtung gelagerten Abschnitt mit einem Endstück aufweisen. Das Endstück weist beispielsweise einen größeren Durchmesser als der Nadelschaft auf. Bevorzugt ist in diesem Fall das Endstück zwischen dem ersten Kolbenteil und dem zweiten Kolbenteil eingeklemmt. Dadurch wird ein Spiel zwischen dem Kolben und der Nadel vermieden, was eine exakte Verstellbarkeit der Nadel verhindern würde.

Der Kolben kann verdrehgesichert sein. Dadurch wird ein unbeabsichtigtes Verdrehen des Kolbens vermieden und dieser bleibt immer exakt orientiert.

Der erste Kolbenteil des Kolbens kann einen Kolbenstempel aufweisen, welcher aus der Betätigungsvorrichtung herausragt. Ein maximaler Weg des Kolbenstempels aus der Betätigungsvorrichtung kann von der Stellvorrichtung bestimmbar sein. Der maximale Weg des Kolbenstempels aus der Betätigungsvorrichtung bestimmt in diesem Fall den Öffnungshub der Nadel.

Die Nadel kann in dem geteilten Kolben verdrehgesichert angeordnet sein. Die Nadel kann beispielsweise in einer Führungsbuchse angeordnet sein. Dadurch wird ein unbeabsichtigtes Verstellen der Nadel vermieden und diese bleibt immer exakt relativ zu dem Kolben orientiert.

Die Düsenspitze kann mehrere zylindrische Flächen zum Führen der Nadel aufweisen. Die Düsenspitze kann eine mit der Austrittsöffnung in Verbindung stehende Durchtrittsbohrung für das Spritz gut aufweisen, in der die Nadel verschiebbar angeordnet ist. Die Düsenspitze kann im Bereich der Durchtrittsbohrung mehrere zylindrisch konisch ausgebildete Einkerbungen aufweisen.

Ein Außenteil der Düse kann am vorderen Ende eine zylindrische Fläche aufweisen. Die zylindrische Fläche am vorderen Ende kann zum Positionieren der Düse in dem Düsenkörper ausgebildet sein.

Die Düsenspitze kann mit dem Düsenkörper formschlüssig verbunden sein.

Unter einer formschlüssigen Verbindung ist im Rahmen der vorliegenden Erfindung eine Verbindung zu verstehen, die durch das Ineinandergreifen von mindestens zwei Verbindungspartnern entsteht. Dadurch können sich die Verbindungspartner auch ohne oder bei unterbrochener Kraftübertragung nicht lösen. Anders ausgedrückt ist bei einer formschlüssigen Verbindung der eine Verbindungspartner dem anderen im Weg. Bei Betriebsbelastung wirken Druckkräfte normal, das heißt rechtwinklig zu den Flächen der Verbindungspartner. Solche "Sperrungen" kommen in mindestens einer Richtung vor. Ist ein zweites Flächenpaar gegenüber angeordnet, ist auch die Gegenrichtung gesperrt. Im Rahmen der vorliegenden Erfindung verhindert eine formschlüssige Verbindung eines Düsenkörpers und einer Düsenspitze eine translatorische Bewegung der Düsenspitze und des Düsenkörpers zueinander in einer axialen Richtung bezüglich einer Zufuhrkanalachse eines Zufuhrkanals des Düsenkörpers und einer Längsachse der Düsenspitze. Da die Zufuhrkanalachse und die Längsachse in einem verbundenen Zustand der Düsenspitze und des Düsenkörpers zusammenfallen bzw. sich überlappen, wird durch die formschlüssige Verbindung der Düsenspitze und des Düsenkörpers eine Bewegung in einer rein axialen Richtung bezüglich der Zufuhrkanalachse und der Längsachse verhindert.

Insbesondere kann die Düsenspitze mit dem Düsenkörper mittels einer Schraubverbindung verbunden sein. Beispielsweise ist die Düsenspitze in den Düsenkörper eingeschraubt. Dadurch ist die Düsenspitze mit dem Düsenkörper gasdicht verbunden.

Eine erfindungsgemäße Spritzgussform für Spritzgut weist mindestens eine Formplatte auf. Die Formplatte weist einen Einspritzkanal auf, der in einer Einspritzöffnung mündet. Die Spritzgussform weist weiterhin ein Nadelverschlussdüsensystem nach einer der oben beschriebenen Ausführungsformen auf

Unter einer Spritzgussform ist eine Vorrichtung mit mindestens einem Hohlraum, auch Formnest oder Kavität genannt, zu verstehen, welche eingerichtet ist, das Spritzgut zu formen. Der Hohlraum kann von einer oder mehreren Formplatten begrenzt werden. Die Form der Spritzgussform kann grundsätzlich beliebig ausgestaltet werden, wobei das Formnest beispielsweise an den zu formenden Gegenstand angepasst werden kann. Weiter kann die Spritzgussform beispielsweise temperiert werden, beispielsweise auf eine Temperatur aufgeheizt werden, bei der eine Vulkanisation des Spritzgutes erfolgt, damit das Spritzgut in dem Formwerkzeug vulkanisieren kann.

Zusammenfassend sind im Rahmen der vorliegenden Erfindung folgende Ausführungsformen besonders bevorzugt:
Ausführungsform 1: Nadelverschlussdüsensystem, umfassend eine Einspritzdüse zum Einbringen von Spritzgut in eine Spritzgussform, wobei die Einspritzdüse einen Düsenkörper und eine Düsenspitze mit einer Austrittsöffnung für das Spritzgut aufweist, eine Nadel, wobei die Nadel in dem Düsenkörper derart angeordnet ist, dass die Nadel zum wahlweisen Öffnen oder Verschließen der Austrittsöffnung in einer Längserstreckungsrichtung des Düsenkörpers axial verschiebbar ist, eine Betätigungsvorrichtung zum Verschieben der Nadel und eine Stellvorrichtung zum Einstellen eines Öffnungshubs der Nadel, wobei der Öffnungshub der Nadel mittels einer verschiebbaren, konvexen Anschlagfläche der Stellvorrichtung einstellbar ist.
Ausführungsform 2: Nadelverschlussdüsensystem nach der vorhergehenden Ausführungsform, wobei der Öffnungshub der Nadel mittels der verschiebbaren, konvexen Anschlagfläche der Stellvorrichtung stufenlos einstellbar ist.
Ausführungsform 3: Nadelverschlussdüsensystem nach einer der beiden vorhergehenden Ausführungsformen, wobei die Stellvorrichtung mindestens eine Kugel aufweist, wobei die Kugel die verschiebbare, konvexe Anschlagfläche aufweist.
Ausführungsform 4: Nadelverschlussdüsensystem nach der vorhergehenden Ausführungsform, wobei die verschiebbare, konvexe Anschlagfläche eine Oberfläche der Kugel ist.
Ausführungsform 5: Nadelverschlussdüsensystem nach einer der beiden vorhergehenden Ausführungsformen, wobei die Stellvorrichtung eine Kurvenbahn zum Führen der Kugel aufweist.
Ausführungsform 6: Nadelverschlussdüsensystem nach der vorhergehenden Ausführungsform, wobei sich ein erster Abschnitt der Kurvenbahn abschnittsweise in einer Richtung erstreckt, die im Wesentlichen parallel zu der Längserstreckungsrichtung des Düsenkörpers ist.
Ausführungsform 7: Nadelverschlussdüsensystem nach der vorhergehenden Ausführungsform, wobei der erste Abschnitt der Kurvenbahn der Betätigungsvorrichtung zugewandt ist.
Ausführungsform 8: Nadelverschlussdüsensystem nach einer der beiden vorhergehenden Ausführungsformen, wobei sich ein zweiter Abschnitt der Kurvenbahn abschnittsweise in einer Richtung erstreckt, die im Wesentlichen senkrecht zu der Längserstreckungsrichtung des Düsenkörpers ist.
Ausführungsform 9: Nadelverschlussdüsensystem nach der vorhergehenden Ausführungsform, wobei der zweite Abschnitt der Kurvenbahn der Betätigungsvorrichtung abgewandt ist.
Ausführungsform 10: Nadelverschlussdüsensystem nach einer der vorhergehenden Ausführungsformen, wobei die Stellvorrichtung eine Gewindespindel oder eine elektrische Antriebsvorrichtung aufweist.
Ausführungsform 11: Nadelverschlussdüsensystem nach einer der vorhergehenden Ausführungsformen, wobei die Betätigungsvorrichtung als Pneumatik- oder Hydrauliksystem ausgebildet ist.
Ausführungsform 12: Nadelverschlussdüsensystem nach einer der vorhergehenden Ausführungsformen, wobei die Betätigungsvorrichtung einen zweiteiligen Kolben mit einem ersten Kolbenteil und einem zweiten Kolbenteil aufweist.
Ausführungsform 13: Nadelverschlussdüsensystem nach der vorhergehenden Ausführungsform, wobei die Nadel einen Nadelschaft und einen in der Betätigungsvorrichtung gelagerten Abschnitt mit einem Endstück aufweist, wobei das Endstück einen größeren Durchmesser als der Nadelschaft aufweist, wobei das Endstück zwischen dem ersten und dem zweiten Kolbenteil eingeklemmt ist.
Ausführungsform 14: Nadelverschlussdüsensystem nach einer der beiden vorhergehenden Ausführungsformen, wobei der Kolben verdrehgesichert ist.
Ausführungsform 15: Nadelverschlussdüsensystem nach einer der drei vorhergehenden Ausführungsformen, wobei der erste Kolbenteil des Kolbens einen Kolbenstempel aufweist, welcher aus der Betätigungsvorrichtung herausragt, wobei ein maximaler Weg des Kolbenstempels aus der Betätigungsvorrichtung von der Stellvorrichtung bestimmbar ist.
Ausführungsform 16: Nadelverschlussdüsensystem nach der vorhergehenden Ausführungsform, wobei der maximale Weg des Kolbenstempels aus der Betätigungsvorrichtung den Öffnungshub der Nadel bestimmt.
Ausführungsform 17: Nadelverschlussdüsensystem nach einer der vorhergehenden Ausführungsformen, wobei die Nadel in dem geteilten Kolben verdrehgesichert angeordnet ist.
Ausführungsform 18: Nadelverschlussdüsensystem nach einer der vorhergehenden Ausführungsformen, wobei die Nadel in einer Führungsbuchse angeordnet ist.
Ausführungsform 19: Nadelverschlussdüsensystem nach einer der vorhergehenden Ausführungsformen, wobei die Düsenspitze mehrere zylindrische Flächen zum Führen der Nadel aufweist.
Ausführungsform 20: Nadelverschlussdüsensystem nach einer der vorhergehenden Ausführungsformen, wobei die Düsenspitze eine mit der Austrittsöffnung in Verbindung stehende Durchtrittsbohrung für das Spritzgut aufweist, in der die Nadel verschiebbar angeordnet ist, wobei die Düsenspitze im Bereich der Durchtrittsbohrung mehrere zylindrisch konisch ausgebildete Einkerbungen aufweist.
Ausführungsform 21: Nadelverschlussdüsensystem nach einer der vorhergehenden Ausführungsformen, wobei der Außenteil der Düse am vorderen Ende eine zylindrische Fläche aufweist.
Ausführungsform 22: Nadelverschlussdüsensystem nach der vorhergehenden Ausführungsform, wobei die zylindrische Fläche am vorderen Ende zum Positionieren der Düsenspitze im Inneren des Düsenkörpers ausgebildet ist.
Ausführungsform 23: Nadelverschlussdüsensystem nach einer der vorhergehenden Ausführungsformen, wobei die Düsenspitze mit dem Düsenkörper formschlüssig verbunden ist.
Ausführungsform 24: Nadelverschlussdüsensystem nach einer der vorhergehenden Ausführungsformen, wobei die Düsenspitze mit dem Düsenkörper mittels einer Schraubverbindung verbunden ist.
Ausführungsform 25: Nadelverschlussdüsensystem nach einer der vorhergehenden Ausführungsformen, wobei die Düsenspitze in den Düsenkörper eingeschraubt ist.
Ausführungsform 26: Spritzgussform für Spritzgut mit mindestens einer Formplatte, die einen Einspritzkanal aufweist, der in einer Einspritzöffnung mündet, und mit einem Nadelverschlussdüsensystem nach einer der vorhergehenden Ausführungsformen.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: eine erste Längsschnittdarstellung eines Ausführungsbeispiels einer Spritzgussform mit Einspritzdüse;
- Figur 2: eine zweite Längsschnittdarstellung der Spritzgussform mit Einspritzdüse;
- Figur 3: eine vergrößerte Ansicht eines Details C der Figur 2,
- Figur 4: eine Vorderansicht der Düsenspitze der Einspritzdüse und
- Figur 5: eine Querschnittsansicht der Düsenspitze entlang einer Linie A-A der Figur 4.

### Ausführungsbeispiele

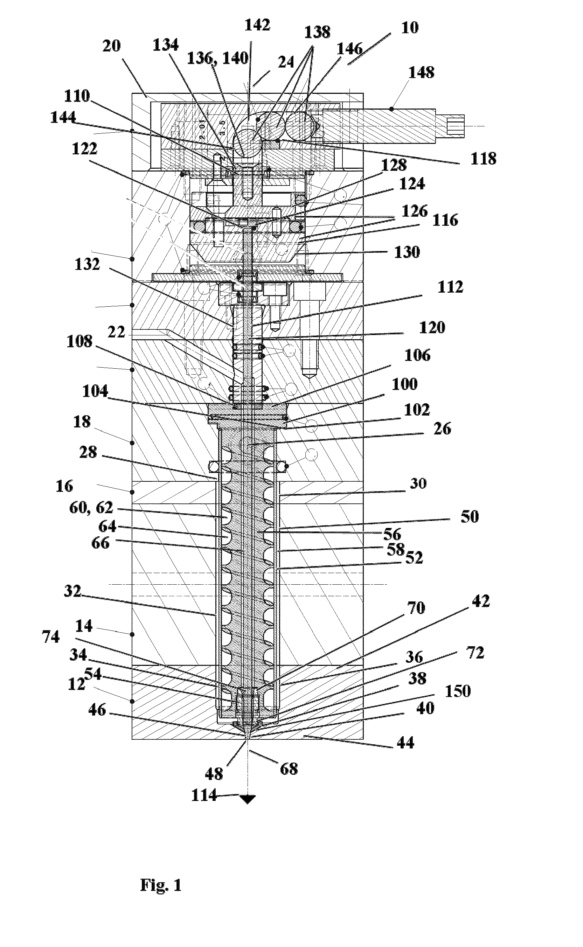

Ein Ausführungsbeispiel einer erfindungsgemäßen Spritzgussform 10 für Spritzgut ist in Figur 1 dargestellt. Figur 1 zeigt eine erste Längsschnittdarstellung eines Ausführungsbeispiels der Spritzgussform 10. Als Spritzgut kann beispielsweise Kunststoffinaterial, insbesondere Elastomere, für die Herstellung von Kunststoffformen verwendet werden. Elastomere vernetzen bei Erhitzung einer bestimmten Temperatur, der so genannten Vernetzungstemperatur.

Die Spritzgussform 10 weist eine Formplatte 12, eine Heizplatte 14, eine Isolierplatte 16 und eine Düsenhalteplatte 18 auf. Die Spritzgussform 10 steht mit einer Zufuhrvorrichtung 20 zum Zuführen von Spritzgut über eine Zufuhrbohrung 22 in Verbindung, wie nachstehend ausführlicher beschrieben wird. Die Formplatte 12, die Heizplatte 14, die Isolierplatte 16 und die Düsenhalteplatte 18 sind in dieser Reihenfolge derart aufeinander angeordnet, dass sie eine Längsachse 24 definieren, entlang der sie sich erstrecken.

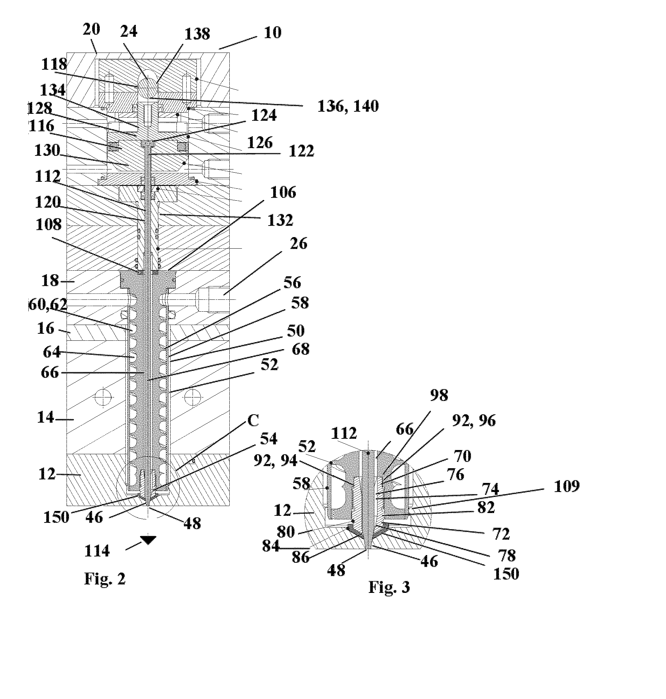

Figur 2 zeigt eine zweite Längsschnittdarstellung der Spritzgussform 10. Die zweite Längsschnittdarstellung ist im Vergleich zu der ersten Längsschnittdarstellung um 90 ° um die Längsachse 24 gedreht. In der Düsenhalteplatte 18 ist ein Kühlkanal 26 ausgebildet. Der Kühlkanal 26 ist senkrecht zu der Längsachse 24 orientiert und durchdringt die Düsenhalteplatte 18 vollständig. Die Düsenhalteplatte 18 weist in ihrer Mitte eine zylindrische Bohrung 28 auf, die sich in axialer Richtung bezüglich der Längsachse 24 erstreckt. Die Isolierplatte 16 weist in ihrer Mitte eine zylindrische Bohrung 30 auf, die sich in axialer Richtung bezüglich der Längsachse 24 erstreckt. Die Heizplatte 14 weist in ihrer Mitte eine zylindrische Bohrung 32 auf, die sich in axialer Richtung bezüglich der Längsachse 24 erstreckt.

Die Formplatte 12 weist in ihrer Mitte eine Formplattenbohrung 34 auf, die sich in axialer Richtung bezüglich der Längsachse 24 erstreckt. Die Formplattenbohrung 34 weist einen ersten Abschnitt 36, einen zweiten Abschnitt 38 und einen dritten Abschnitt 40 auf. Der erste Abschnitt 36 befindet sich an einem der Heizplatte 14 zugewandten Hinterende 42 der Formplatte 12. Der dritte Abschnitt 40 befindet sich an einem der Heizplatte 14 abgewandten Vorderende 44 der Formplatte 12. Der zweite Abschnitt 38 befindet sich zwischen dem ersten Abschnitt 36 und dem dritten Abschnitt 40 in axialer Richtung bezüglich der Längsachse 24 gesehen. Der erste Abschnitt 36 der Formplattenbohrung 34 der Formplatte 12, die Bohrung 32 der Heizplatte 14 und die Bohrung 30 der Isolierplatte 16 weisen einen identischen Durchmesser auf. Der Durchmesser der Bohrung 28 der Düsenhalteplatte 18 ist etwas kleiner als der Durchmesser des ersten Abschnitts 36 der Formplattenbohrung 34 der Formplatte 12, der Bohrung 32 der Heizplatte 14 und der Bohrung 30 der Isolierplatte 16. Der zweite Abschnitt 38 der Formplattenbohrung 34 der Formplatte weist einen Durchmesser auf, der kleiner als der Durchmesser des ersten Abschnitts 36 der Formplattenbohrung 34 der Formplatte 12 ist. Der dritte Abschnitt 40 der Formplattenbohrung 34 der Formplatte 12 weist einen Durchmesser auf, der kleiner als der Durchmesser des zweiten Abschnitts 38 der Formplattenbohrung 34 der Formplatte 12 ist. Der zweite Abschnitt 38 ist kegelförmig ausgebildet, so dass sich sein Durchmesser in Richtung zu dem dritten Abschnitt 40 verjüngt. Der dritte Abschnitt 40 ist kegelförmig ausgebildet, so dass sich sein Durchmesser in Richtung zu dem Vorderende 44 verjüngt. Die Formplatte 12 weist weiterhin einen Einspritzkanal 46 auf, der von dem dritten Abschnitt 40 gebildet wird. Der Einspritzkanal 46 mündet in einer Einspritzöffnung 48. Die Einspritzöffnung 48 steht mit einem Formnest in Verbindung, das von der Formplatte 12 und einer weiteren Formplatte begrenzt ist (nicht im Detail gezeigt).

Die Bohrungen 28, 30, 32 und die Formplattenbohrung 34 dienen der Aufnahme einer Einspritzdüse 50 zum Einbringen von Spritzgut in die Spritzgussform 10 wie nachstehend näher beschrieben wird. Der Ausdruck "Einbringen von Spritzgut in die Spritzgussform 10" ist dabei so zu verstehen, dass die Einspritzdüse 50 verwendet wird, um das Spritzgut in das Formnest der Spritzgussform 10 einzubringen. Die Einspritzdüse 50 weist einen Düsenkörper 52 und eine Düsenspitze 54 auf. Der Düsenkörper 52 weist einen Kernteil 56 und eine Hülse 58 auf. Die Hülse 58 ist zylindrisch ausgebildet. Der Kernteil 56 ist im Inneren der Hülse 58 angeordnet. Der Kernteil 56 ist mit der Hülse 58 verbunden. Der Kernteil 56 ist mit der Hülse 58 insbesondere unlösbar verbunden, beispielsweise verschweißt oder verlötet. Der Düsenkörper 52 weist einen Kühlkanal 60 auf. Der Kühlkanal 60 ist in Form einer doppelgängigen Kühlspirale 62 ausgebildet. Der Kühlkanal 60 ist beispielsweise von einer Nut 64 gebildet, die in einer Außenfläche des Kernteils 56 ausgebildet ist. Die Nut 64 ist nach außen von der Hülse 58 verschlossen. Der Düsenkörper 52 weist weiterhin einen Zufuhrkanal 66 zum Zuführen des Spritzguts zu der Düsenspitze 54 auf. Der Zufuhrkanal 66 erstreckt sich entlang einer Zufuhrkanalachse 68. Die Zufuhrkanalachse 68 überlappt mit der Längsachse 24 in einem Zustand, in dem die Einspritzdüse 50 in den Bohrungen 28, 30, 32 und der Formplattenbohrung 34 der Spritzgussform 10 eingesetzt ist.

Figur 3 zeigt eine vergrößerte Ansicht eines Details C der Figur 2. Die Düsenspitze 54 weist einen hinteren Abschnitt 70 und einen vorderen Abschnitt 72 auf. Zum Zuführen des Spritzguts in die Spritzgussform 10 weist die Düsenspitze 54 eine Durchtrittsbohrung 74 auf Die Durchtrittsbohrung 74 weist mindestens einen ersten Durchmesser 76 und einen zweiten Durchmesser 78 auf Der erste Durchmesser 76 ist größer als der zweite Durchmesser 78. Der erste Durchmesser 76 ist in dem hinteren Abschnitt 70 angeordnet. Der zweite Durchmesser 78 ist in dem vorderen Abschnitt 72 angeordnet und verjüngt sich kegelförmig in einer Richtung von dem hinteren Abschnitt 70 weg. Die Düsenspitz 54 weist weiterhin ein dem Düsenkörper 52 abgewandtes vorderes Ende 80 auf. Das vordere Ende 80 ist kegelförmig ausgebildet und befindet sich an dem vorderen Abschnitt 72. Das vordere Ende 80 ist somit zum Anliegen an die Formplatte 12 ausgebildet, wie nachstehend ausführlicher beschrieben wird.

Ein Außenteil 82 bzw. Außenumfang der Düsenspitz 54 weist an dem vorderen Ende 80 bzw. genauer vorderen Abschnitt 72 eine zylindrische Fläche 84 auf. Die zylindrische Fläche 84 ist zum Positionieren der Düsenspitze 54 im Düsenkörper 52 ausgebildet, wie nachstehend ausführlicher beschrieben wird.

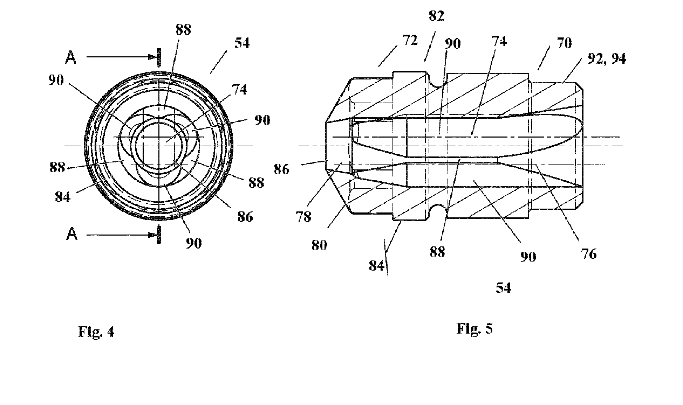

Figur 4 zeigt eine Vorderansicht der Düsenspitze 54. Wie aus Figur 4 zu erkennen ist, weist die Düsenspitze 54 eine Austrittsöffnung 86 auf. Die Austrittsöffnung 86 ist kreisförmig ausgebildet. Die Durchtrittsbohrung 74 steht mit der Austrittsöffnung 86 in Verbindung.

Figur 5 zeigt eine Querschnittsansicht der Düsenspitze 54 entlang der Linie A-A der Figur 4. Die Düsenspitze 54 weist im Bereich der Durchtrittsbohrung 74 mehrere zylindrische Flächen 88 auf. Die Düsenspitze 54 weist weiterhin im Bereich der Durchtrittsbohrung 74 mehrere zylindrisch konisch ausgebildete Einkerbungen 90 auf.

Nun wird zu Figur 3 zurückgekehrt. Figur 3 zeigt insbesondere die Düsenspitze 54 und einen Teil des Düsenkörpers 52. Wie aus Figur 3 gut zu erkennen ist, ist die Düsenspitze 54 mit dem Düsenkörper 52 formschlüssig verbunden. Genauer ist die Düsenspitze 54 mit dem Düsenkörper 52 mittels einer Schraubverbindung 92 verbunden. Beispielsweise weist der hintere Abschnitt 70 ein Außengewinde 94 auf und der Düsenkörper 52 weist ein Innengewinde 96 an einem der Düsenspitze 54 zugewandten Vorderende 98 auf. Die Düsenspitze 54 ist dann in den Düsenkörper 52 eingeschraubt. Entsprechend ist die Schraubverbindung 92 mittels des Außengewindes 94 und des Innengewindes 96 realisiert, die ineinandergreifen. Dadurch ist die Düsenspitze 54 mit dem Düsenkörper 52 gasdicht verbunden. Des Weiteren ist dadurch der hintere Abschnitt 70 der Düsenspitze 54 innerhalb des Düsenkörpers 52 angeordnet, wohingegen der vordere Abschnitt 72 außerhalb des Düsenkörpers 52 angeordnet ist. Die formschlüssige Verbindung der Düsenspitze 54 mit dem Düsenkörper 52 wirkt auf Grund der Schraubverbindung 92 einer relativen Bewegung der Düsenspitze 54 und des Düsenkörpers 52 zueinander in einer ausschließlich axialen Richtung bezüglich der Zufuhrkanalachse 66 des Düsenkörpers 52 entgegen. Der Formschluss lässt lediglich eine Kombination aus einer axialen Bewegung und einer rotatorischen Bewegung der Düsenspitze 54 und des Düsenkörpers 52 zueinander bezüglich der Zufuhrkanalachse 66 des Düsenkörpers 52 zu. Eine derartige Kombination aus einer axialen Bewegung und einer rotatorischen Bewegung der Düsenspitze 54 und des Düsenkörpers 52 zueinander erfolgt insbesondere bei einem Einschrauben der Düsenspitze 54 in den Düsenkörper 52 oder bei einem Herausschrauben der Düsenspitze 54 aus den Düsenkörper 52. Der erfindungsgemäß vorgesehene Formschluss zwischen der Düsenspitze 54 und dem Düsenkörper 52 verhindert somit eine rein translatorische Bewegung der Düsenspitze 54 und des Düsenkörpers 52 zueinander in einer axialen Richtung bezüglich der Zufuhrkanalachse 66 des Düsenkörpers 52.

Die Einspritzdüse 50 ist in den Bohrungen 28, 30, 32 und der Formplattenbohrung 34 der Spritzgussform 10 eingesetzt. Die Einspritzdüse 50 ist so ausgebildet, dass die Einspritzdüse 50 ortsfest in der Düsenhalteplatte 18 der Spritzgussform 10 gehalten ist. So weist, auch wenn dies nicht näher dargestellt ist, beispielsweise zum Verhindern einer Drehung der Einspritzdüse 50 in der Spritzgussform 10 der Düsenkörper 52 außen an einem der Düsenspitze 54 abgewandten hinteren Abschnitt 100 einen Anschlag 102 auf. Der Anschlag 102 ist zum Eingreifen in eine in der Düsenhalteplatte 18 der Spritzgussform 10 ausgebildete Nut 104 ausgebildet. Somit wird eine Verdrehsicherung realisiert, welche ein Verdrehen des Düsenkörpers 52 beim Herausschrauben oder Hineinschrauben der Düsenspitze 54 verhindert und somit die richtige Lage der doppelgängigen Kühlspirale 62 zu dem Kühlkanal 26 in der Düsenhalteplatte 18 gewährleistet. Des Weiteren weist die Einspritzdüse 50 an einem der Düsenspitze 54 abgewandten Hinterende 106 eine Dichtung 108 auf, deren Funktion unten ausführlicher beschrieben ist. Insbesondere ist die Einspritzdüse 50 zwischen der Spritzgussform 10 und der Zufuhrvorrichtung 20 zum Zuführen von Spritzgut zu der Einspritzdüse 50 eingespannt.

Das kegelförmige Vorderende 80 der Düsenspitze 54 ist dabei innerhalb des kegelförmigen Abschnitts 40 der Formplattenbohrung 34 angeordnet. Mittels der zylindrischen Fläche 84 ist die Düsenspitze 54 in dem Düsenkörper 52 positioniert. Die Einspritzdüse 50 ist dabei gegenüber der Formplatte 12 thermisch isoliert. Der Düsenkörper 52 berührt die beheizte Formplatte 12 nicht über seinen gesamten Außenumfang, sondern nur abschnittsweise. Beispielsweise ist eine Berührung zwischen Düsenkörper 52 und Formplatte 12 an wulstförmigen Anschlagflächen 109 der Formplatte 12 gegeben. Beispielsweise sind drei Anschlagflächen 109 gleichmäßig beabstandet in einer Umfangsrichtung um den Düsenkörper 52 auf einer dem Düsenkörper 52 zugwandten Innenseite der Bohrung 34 angeordnet, von denen eine bezogen auf die Darstellung der Figur 3 rechts erkennbar ist. Die Anschlagflächen 109 sorgen für einen flächigen Kontakt zwischen der Formplatte 12 und dem Düsenkörper 52 ohne eine vollflächige Berührung über ihre gesamten Oberflächen zu bewirken.

Nun wird wieder zu den Figuren 1 und 2 zurückgekehrt. Die oben beschriebene Spritzgussform 10 weist weiterhin ein Nadelverschlussdüsensystem 110 auf. Das Nadelverschlussdüsensystem 110 weist eine Nadel 112 auf. Die Nadel 112 ist derart in dem Düsenkörper 52 angeordnet, dass die Nadel 112 zum wahlweisen Öffnen oder Verschließen der Austrittsöffnung 86 in einer Längserstreckungsrichtung 114 des Düsenkörpers 52 axial verschiebbar ist. Die Längserstreckungsrichtung 114 verläuft parallel zu der Zufuhrkanalachse 68. Das Nadelverschlussdüsensystem 110 weist weiterhin eine Betätigungsvorrichtung 116 zum Verschieben der Nadel 112 und eine Stellvorrichtung 118 zum Einstellen eines Öffnungshubs der Nadel 112 auf. Die Nadel 112 ist ebenfalls in der Durchtrittsbohrung 74 der Düsenspitze 54 verschiebbar angeordnet. Die zylindrischen Flächen 88 dienen zum Führen der Nadel 112. Die zylindrisch konisch ausgebildete Einkerbungen 90 lassen Spritzgut entlang der Nadel 112 zu der Austrittsöffnung 86 durch, so dass nur die Austrittsöffnung 86 von der Nadel 112 verschließbar ist, nicht jedoch die gesamte Durchtrittsbohrung 74.

Die Nadel 112 weist einen Nadelschaft 120 und einen in der Betätigungsvorrichtung 116 gelagerten Abschnitt 122 mit einem Endstück 124 auf. Das Endstück 124 weist einen größeren Durchmesser als der Nadelschaft 120 auf Die Betätigungsvorrichtung 116 ist als Pneumatik- oder Hydrauliksystem ausgebildet. Die Betätigungsvorrichtung 116 weist einen zweiteiligen Kolben 126 mit einem ersten Kolbenteil 128 und einem zweiten Kolbenteil 130 auf. Der Kolben 126 ist verdrehgesichert in der Spritzgußform 10 angeordnet. Das Endstück 124 der Nadel 112 ist zwischen dem ersten Kolbenteil 128 und dem zweiten Kolbenteil 130 eingeklemmt. Die Nadel 112 ist in dem geteilten Kolben 126 verdrehgesichert angeordnet. Beispielsweise ist die Nadel 112 in einer Führungsbuchse 132 angeordnet. Die an dem Hinterende 106 der Düsenspitze 50 angeordnete Dichtung 108 dichtet den Zufuhrkanal 66 gegenüber der Führungsbuchse 132 ab.

Der erste Kolbenteil 128 des Kolbens 126 weist einen Kolbenstempel 134 auf, welcher aus der Betätigungsvorrichtung 116 herausragt. Ein maximaler Weg des Kolbenstempels 134 aus der Betätigungsvorrichtung 116 ist von der Stellvorrichtung 118 bestimmbar, wie nachstehend ausführlicher beschrieben wird. Der maximale Weg des Kolbenstempels 134 aus der Betätigungsvorrichtung 116 bestimmt den Öffnungshub der Nadel 112.

Der Öffnungshub der Nadel 112 ist mittels einer verschiebbaren, konvexen Anschlagfläche 136 der Stellvorrichtung 118 einstellbar. Der Öffnungshub ist insbesondere stufenlos einstellbar. So weist die Stellvorrichtung 118 mindestens eine Kugel 138 auf, wobei die Kugel die verschiebbare, konvexe Anschlagfläche 136 aufweist. Die verschiebbare, konvexe Anschlagfläche 136 ist beispielsweise eine Oberfläche 140 der Kugel 138. Bei der gezeigten Ausführungsform weist die Stellvorrichtung 118 mehrere Kugeln 138 auf, wobei die dem Kolbenstempel 134 zugewandte Kugel 138 die Anschlagfläche 136 aufweist und mit dieser den Kolbenstempel 134 berührt.

Zum Führen der Kugel 138 weist die Stellvorrichtung 118 weiterhin eine Kurvenbahn 142 auf. Ein erster Abschnitt 144 der Kurvenbahn 142 erstreckt sich abschnittsweise in einer Richtung, die im Wesentlichen parallel zu der Längserstreckungsrichtung 114 des Düsenkörpers 52 ist. Der erste Abschnitt 144 der Kurvenbahn 142 ist dabei der Betätigungsvorrichtung 116 zugewandt. Ein zweiter Abschnitt 146 der Kurvenbahn 142 erstreckt sich abschnittsweise in einer Richtung, die im Wesentlichen senkrecht zu der Längserstreckungsrichtung 114 des Düsenkörpers 52 ist. Der zweite Abschnitt 146 der Kurvenbahn 142 ist dabei der Betätigungsvorrichtung 116 abgewandt. Zum Verschieben der mindestens einen Kugel 138 in der Kurvenbahn 142 weist die Stellvorrichtung 118 weiterhin eine Gewindespindel 148 auf. Alternativ kann die Stellvorrichtung 118 zum Verschieben der mindestens einen Kugel 138 in der Kurvenbahn 142 eine elektrische Antriebsvorrichtung aufweisen. Eine solche elektrische Antriebsvorrichtung kann als Rotations- oder Linearantrieb ausgeführt sein.

Nachstehend wird die Betriebsweise der Spritzgußform 10 beschrieben. Mittels der Zufuhrvorrichtung 20 wird Spritzgut aus der Zufuhrbohrung 22 in den Zufuhrkanal 66 in dem Düsenkörper 52 eingebracht. Das Spritzgut fließt aus dem Zufuhrkanal 66 in die Durchtrittsbohrung 74 der Düsenspitze 54. Die Nadel 112 ist axial bezüglich der Zufuhrkanalachse 68 verschiebbar. Die Düsenspitze 54 ist so ausgebildet, dass die Austrittsöffnung 86 mittels der Nadel 112 wahlweise verschließbar oder freigebbar ist. Insbesondere kann die Austrittsöffnung 86 durch eine axiale Verschiebung der Nadel 112 in Richtung zu der Düsenspitze 54 verschlossen werden und durch eine axiale Verschiebung der Nadel 112 in Richtung von der Düsenspitze 54 weg freigegeben werden. Dies ermöglicht eine Unterbrechung des Förderstroms des Spritzguts. Dies ist beispielsweise von Interesse, falls die durch Spritzguß herzustellenden Bauteile nacheinander hergestellt werden sollen.

Der Öffnungshub der in Längsrichtung verschiebbaren Nadel 112 wird durch den geteilten und lagesicherten bzw. verdrehgesicherten Kolben 126 in axialer Richtung getätigt. Mit anderen Worten wird durch eine axiale Bewegung die Nadel 112 axial verschoben, da das Endstück 124 zwischen dem ersten Kolbenteil 128 und dem zweiten Kolbenteil 130 eingeklemmt ist. Die Stellvorrichtung 118 stellt dabei den Öffnungshub ein. So wird der Öffnungshub bei einer Bewegung der mindestens einen Kugel 138 in der Kurvenbahn 142 zu dem Kolbenstempel 134 hin verkleinert und bei einer Bewegung der mindestens einen Kugel 138 in der Kurvenbahn 142 von dem Kolbenstempel 134 weg vergrößert. Des Weiteren weisen die Nadel 112 und der Kolben 126 wie oben beschrieben eine Verdrehsicherung auf, so dass die Nadel 112 verdrehgesichert im System positioniert ist, welches ermöglicht die Nadel 112 im vorderen Bereich, der Kontur des Formplatte 12 anzugleichen, wie beispielsweise einen Anspritzpunkt auf einer Freiformfläche. Die Hubbewegung kann als Pneumatik- oder Hydrauliksystem ausgeführt sein.

Aus der Durchtrittsbohrung 74 gelangt das Spritzgut in den Einspritzkanal 46 der Formplatte 12. Der Einspritzkanal 46 mündet in der Einspritzöffnung 48. Die Einspritzöffnung 48 steht mit einem Formnest in Verbindung, das von der Formplatte 12 und einer weiteren Formplatte begrenzt ist (nicht im Detail gezeigt). In dieses Formnest gelangt das Spritzgut über den Einspritzkanal 46 und die Einspritzöffnung 48. Das Formnest gibt dabei die Form des durch Spritzguß herzustellenden Bauteils vor. Während dieses Herstellungsprozesses strömt eine Kühlflüssigkeit durch die Kühlkanäle 26, 60 und hält so die Einspritzdüse 50 auf einer vergleichsweisen niedrigen Temperatur. Die Temperatur ist so niedrig, dass das Spritzgut nicht im Inneren der Einspritzdüse 50 ausvulkanisiert und diese so verstopft. Da sich die Einspritzdüse 50 von der kalten Düsenhalteplatte 18 über die Isolierplatte 16.und durch die Heizplatte 14 und bis in die heiße Formplatte 12 hinein erstreckt, sind Maßnahmen getroffen, um die Temperatur der Einspritzdüse 50 niedrig zu halten. Ein Teil dieser Maßnahmen ist das Durchleiten von Kühlflüssigkeit durch die Kühlkanäle 26, 60. Der Kühlkanal 60 erstreckt sich jedoch nicht bis zu der Düsenspitz 54. Um zu verhindern, dass das Spritzgut im der Durchtrittsbohrung 74 der Düsenspitze 54 ausvulkanisiert, ist die Einspritzdüse 50 auch im Bereich der Düsenspitze 54 gegenüber dem heißen Bereich der Spritzgußform 10 thermisch isoliert. Beispielsweise ist zwischen der Formplatte 12 und der Düsenspitze 54 eine aus mindesten einem wärmeisolierenden Material hergestellte Kappe 150 angeordnet.

### Bezugszeichenliste

- 10: Spritzgussform
- 12: Formplatte
- 14: Heizplatte
- 16: Isolierplatte
- 18: Düsenhalteplatte
- 20: Zufuhrvorrichtung
- 22: Zufuhrbohrung
- 24: Längsachse
- 26: Kühlkanal
- 28: Bohrung
- 30: Bohrung
- 32: Bohrung
- 34: Formplattenbohrung
- 36: erster Abschnitt
- 38: zweiter Abschnitt
- 40: dritter Abschnitt
- 42: Hinterende
- 44: Vorderende
- 46: Einspritzkanal
- 48: Einspritzöffnung
- 50: Einspritzdüse
- 52: Düsenkörper
- 54: Düsenspitze
- 56: Kernteil
- 58: Hülse
- 60: Kühlkanal
- 62: Kühlspirale
- 64: Nut
- 66: Zufuhrkanal
- 68: Zufuhrkanalachse
- 70: hinterer Abschnitt
- 72: vorderer Abschnitt
- 74: Durchtrittsbohrung
- 76: erster Durchmesser
- 78: zweiter Durchmesser
- 80: Vorderes Ende
- 82: Außenteil
- 84: zylindrische Fläche
- 86: Austrittsöffnung
- 88: zylindrische Fläche
- 90: Einkerbungen
- 92: Schraubverbindung
- 94: Außengewinde
- 96: Innengewinde
- 98: Vorderende
- 100: hinterer Abschnitt
- 102: Anschlag
- 104: Nut
- 106: Hinterende
- 108: Dichtung
- 109: Anschlagfläche
- 110: Nadelverschlussdüsensystem
- 112: Nadel
- 114: Längserstreckungsrichtung
- 116: Betätigungsvorrichtung
- 118: Stellvorrichtung
- 120: Nadelschaft
- 122: Abschnitt
- 124: Endstück
- 126: Kolben
- 128: Erster Kolbenteil
- 130: Zweiter Kolbenteil
- 132: Führungsbuchse
- 134: Kolbenstempel
- 136: Anschlagfläche
- 138: Kugel
- 140: Oberfläche
- 142: Kurvenbahn
- 144: Erster Abschnitt
- 146: Zweiter Abschnitt
- 148: Gewindespindel
- 150: Kappe

## Patentansprüche

1. Nadelverschlussdüsensystem (110), umfassend
eine Einspritzdüse (50) zum Einbringen von Spritzgut in eine Spritzgussform (10), wobei die Einspritzdüse (50) einen Düsenkörper (52) und eine Düsenspitze (54) mit einer Austrittsöffnung (86) für das Spritzgut aufweist,
eine Nadel (112), wobei die Nadel (112) in dem Düsenkörper (52) derart angeordnet ist, dass die Nadel (112) zum wahlweisen Öffnen oder Verschließen der Austrittsöffnung in einer Längserstreckungsrichtung (114) des Düsenkörpers (52) axial verschiebbar ist,
eine Betätigungsvorrichtung (116) zum Verschieben der Nadel (112) und
eine Stellvorrichtung (118) zum Einstellen eines Öffnungshubs der Nadel (112), wobei der Öffnungshub der Nadel (112) mittels einer verschiebbaren, konvexen Anschlagfläche (136) der Stellvorrichtung (118) einstellbar ist.

2. Nadelverschlussdüsensystem (110) nach dem vorhergehenden Anspruch, wobei die Stellvorrichtung (118) mindestens eine Kugel (138) aufweist, wobei die Kugel (138) die verschiebbare, konvexe Anschlagfläche (136) aufweist.

3. Nadelverschlussdüsensystem (110) nach einem der beiden vorhergehenden Ansprüche, wobei die Stellvorrichtung (118) eine Kurvenbahn (142) zum Führen der Kugel (138) aufweist.

4. Nadelverschlussdüsensystem (110) nach dem vorhergehenden Anspruch, wobei sich ein erster Abschnitt (144) der Kurvenbahn (142) abschnittsweise in einer Richtung erstreckt, die im Wesentlichen parallel zu der Längserstreckungsrichtung (114) des Düsenkörpers (52) ist.

5. Nadelverschlussdüsensystem (110) nach einem der beiden vorhergehenden Ansprüche, wobei sich ein zweiter Abschnitt (146) der Kurvenbahn (142) abschnittsweise in einer Richtung erstreckt, die im Wesentlichen senkrecht zu der Längserstreckungsrichtung (114) des Düsenkörpers (52) ist.

6. Nadelverschlussdüsensystem (110) nach einem der vorhergehenden Ansprüche, wobei die Stellvorrichtung (118) eine Gewindespindel (148) oder eine elektrische Antriebsvorrichtung aufweist.

7. Nadelverschlussdüsensystem (110) nach einem der vorhergehenden Ansprüche, wobei die Betätigungsvorrichtung (116) einen zweiteiligen Kolben (126) mit einem ersten Kolbenteil (128) und einem zweiten Kolbenteil (130) aufweist, wobei die Nadel (112) einen Nadelschaft (120) und einen in der Betätigungsvorrichtung (116) gelagerten Abschnitt (122) mit einem Endstück (124) aufweist, wobei das Endstück (124) einen größeren Durchmesser als der Nadelschaft (120) aufweist, wobei das Endstück (124) zwischen dem ersten Kolbenteil (128) und dem zweiten Kolbenteil (130) eingeklemmt ist.

8. Nadelverschlussdüsensystem (110) nach dem vorhergehenden Anspruch, wobei der erste Kolbenteil (128) des Kolbens (126) einen Kolbenstempel (134) aufweist, welcher aus der Betätigungsvorrichtung (116) herausragt, wobei ein maximaler Weg des Kolbenstempels (134) aus der Betätigungsvorrichtung (116) von der Stellvorrichtung (118) bestimmbar ist.

9. Nadelverschlussdüsensystem (110) nach dem vorhergehenden Anspruch, wobei der maximale Weg des Kolbenstempels (134) aus der Betätigungsvorrichtung (116) den Öffnungshub der Nadel (112) bestimmt.

10. Nadelverschlussdüsensystem (110) nach einem der vorhergehenden Ansprüche, wobei die Nadel (112) in dem geteilten Kolben (126) verdrehgesichert angeordnet ist.

11. Nadelverschlussdüsensystem (110) nach einem der vorhergehenden Ansprüche, wobei die Nadel (112) in einer Führungsbuchse (132) angeordnet ist.

12. Nadelverschlussdüsensystem (110) nach einem der vorhergehenden Ansprüche, wobei die Düsenspitze (54) mehrere zylindrische Flächen (88) zum Führen der Nadel (112) aufweist, wobei die Düsenspitze (54) eine mit der Austrittsöffnung (86) in Verbindung stehende Durchtrittsbohrung (74) für das Spritzgut aufweist, in der die Nadel (112) verschiebbar angeordnet ist, wobei die Düsenspitze (54) im Bereich der Durchtrittsbohrung (74) mehrere zylindrisch konisch ausgebildete Einkerbungen (90) aufweist.

13. Nadelverschlussdüsensystem (110) nach einem der vorhergehenden Ansprüche, wobei ein Außenteil (82) der Düsenspitze (54) am vorderen Ende (80) eine zylindrische Fläche (84) aufweist.

14. Nadelverschlussdüsensystem (110) nach dem vorhergehenden Anspruch, wobei die zylindrische Fläche (84) am vorderen Ende (80) zum Positionieren der Düsenspitze (54) in einer Formplatte (12) einer Spritzgussform (10) ausgebildet ist.

15. Spritzgussform (10) für Spritzgut mit mindestens einer Formplatte (12), die einen Einspritzkanal (46) aufweist, der in einer Einspritzöffnung (48) mündet, und mit einem Nadelverschlussdüsensystem (110) nach einem der vorhergehenden Ansprüche.
